# EUROPEAN PATENT APPLICATION

(11) **EP 1 395 043 A1**
(43) Date of publication of application: **03.03.2004**
(21) Application number: 03077592.8
(22) Date of filing: 18.08.2003
(51) Int. Cl.: H04N 5/232

(54) **Demo via on-camera display with power jack**

(30) Priority: 29.08.2002 US 406843 P; 09.12.2002 US 314819
(71) Applicant: EASTMAN KODAK COMPANY (a New Jersey corporation), Rochester, New York 14650 (US)
(72) Inventor: Fredlund, John R.. c/o Eastman Kodak Company, Rochester, New York 14650-2201 (US); Johnson, Glenn W. c/o Eastman Kodak Company, Rochester, New York 14650-2201 (US); Tenalio, Michael J. c/o Eastman Kodak Company, Rochester, New York 14650-2201 (US); Volo, Gary C. c/o Eastman Kodak Company, Rochester, New York 14650-2201 (US)
(74) Representative: Weber, Etienne Nicolas

(57) **Abstract**

A method for utilizing an image display on a digital camera, including the steps of: initiating a demo mode demonstrating features and functions related to the digital camera on the image display; running the demonstration while no user input has been detected; terminating the demonstration upon a detection of a user input; allowing normal usage of the image display; and automatically re-initiating the demonstration after a predetermined elapsed period of time without detecting the user input.

## Description

The invention relates generally to the field of digital still cameras and in particular to digital still cameras with a display screen. More specifically, the invention relates to a digital still camera with a display screen capable of displaying demonstration features of the camera.

In a crowded marketplace, there is a need to distinguish one's products. One way in which to distinguish a product is to provide it with a "demo mode" that calls attention to the product and also explains usage or features. Products such as the Phillips FW C1/37™ Stereo Audio System and the Sharp Carousel™ Microwave oven have demo modes that help to sell the products.

These demo modes use text displays to describe features. The devices automatically default to demo mode on power up. This can become annoying since any power interruption causes the demo mode to appear. The alternative is for the device to require some special sequence of inputs to put the device in demo mode. This requires the salesperson to have knowledge of the special sequence and also be motivated to activate the demo mode. This can be problematic in retail environments where employee turnover is rapid and motivation is low.

On occasion, video players are used to demonstrate products. This is expensive, and more often than not, the screens are blank or turned off by employees who become tired of the sound of the demo.

Typically, devices that are battery powered, such as cameras, do not have a demo mode. Consequently, what is needed is a method of displaying a demo mode for battery powered devices like cameras, wherein the demo mode remains powered up and requires no human intervention for activation, and wherein the demo mode may be changeable in the course of normal consumer usage. Additionally, the demo mode should provide functionality beyond demonstrating features and functions of the camera.

The aforementioned need is met by providing a method for utilizing an image display on a digital camera, including the steps of: initiating a demo mode demonstrating features and functions related to the digital camera on the image display; running the demonstration while no user input has been detected; terminating the demonstration upon a detection of a user input; allowing normal usage of the image display; and automatically re-initiating the demonstration after a predetermined elapsed period of time without detecting the user input.

The above and other objects, features, and advantages of the present invention will become more apparent when taken in conjunction with the following description and drawings wherein identical reference numerals have been used, where possible, to designate identical features that are common to the figures, and wherein:
Fig. 1 is a block diagram of a digital still camera system according to the present invention;
Fig. 2 is a rear view of an example of a digital still camera showing a demo according to the present invention;
Fig. 3 is another example of a demo shown according to the present invention;
Fig. 4 is a flowchart for determining whether the camera is in demo mode;
Fig. 5 is a flowchart for powering the camera and inserting and removing a memory card;
Fig. 6 is a flowchart for launching the demo mode;
Fig. 7 shows a rear view of a package for containing and powering the camera on retail shelves;
Fig. 8 shows an example target for demo photographing by a user; and
Fig. 9 shows the camera in a docking station.

To facilitate understanding, identical reference numerals have been used, where possible, to designate identical elements that are common to the figures.

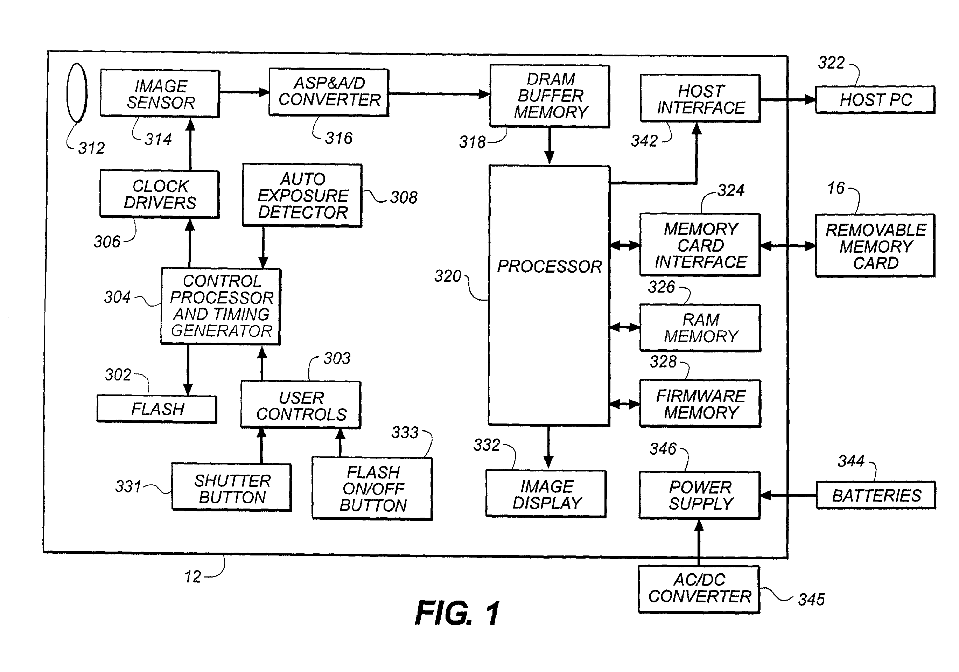

Fig. 1 illustrates a system made in accordance with the present invention. The system includes a digital still camera 12 that produces digital images that are stored on the removable memory card 16. This digital still camera 12 may be of the film/electronic hybrid type such as the Kodak Advantix™ Preview Camera, or of the fully electronic type such as the Kodak LS420™ Digital Camera. The images may be individual still images or motion burst images. The digital still camera 12 is powered by batteries 344 which connect to power supply 346 which supplies power to the digital still camera 12 circuits. The digital still camera 12 may also be powered by AC/DC converter 345. The digital camera 12 includes a lens 312 having zoom and focus motor drives and an adjustable aperture and shutter (not shown). The user composes the image using the optical viewfinder (not shown) or the Image Display 332 and then depresses the shutter button 331 to begin capture of a still image. User controls 303 act as an interface for operation of shutter button 331 and flash on/off button 333. A user can also signal to the control processor 304, via user controls 303, that he has pressed flash on/off button 333. The lens 312 focuses light from a scene (not shown) on an image sensor 314, for example, a single-chip color CCD image sensor, using the well-known Bayer color filter pattern. The image sensor 314 is controlled by clock drivers 306. The clock drivers 306 are controlled by control signals supplied by a control processor and timing generator circuit 304. The control processor and timing generator 304 receives inputs from auto-exposure detector 308 and controls a flash 302. The analog output signal from the image sensor 314 is amplified and converted to digital data by the analog signal processing (ASP) and analog-to-digital (A/D) converter circuit 316. The digital data is stored in a DRAM buffer memory 318 and subsequently processed by a processor 320 controlled by the firmware stored in the firmware memory 328, which can be flash EPROM memory.

The processed digital image file is stored in RAM memory 326 or provided to a memory card interface 324 which stores the digital image file on the removable memory card 16. Removable memory cards 16 are one type of removable image digital storage medium, and are available in several different physical formats. For example, the removable memory card 16 can include memory cards adapted to the PCMCIA card interface standard, as described in the *PC Card Standard, Release 2.0,* published by the Personal Computer Memory Card International Association, Sunnyvale, California, September 1991. The removable memory card 16 can also be adapted to the Compact Flash interface standard, such as described in the *CompactFlash Specification Version 1.4,* published by the CompactFlash Association, Palo Alto, California, August 5, 1998, or to the well-known SmartMedia, MemoryStick or SD memory card formats. Other types of removable image digital storage media, such as magnetic hard drives, magnetic tape, or optical disks, can alternatively be used to store the digital images.

The processor 320 performs color interpolation followed by color and tone correction, in order to produce rendered sRGB image data. The rendered sRGB image data is then JPEG compressed and stored as a JPEG image file on the removable memory card 16. The JPEG file uses the so-called "Exif" image format defined in "*Digital Still Camera Image File Format (Exif)*" version 2.1, July 1998 by the Japan Electronic Industry Development Association (JEIDA), Tokyo, Japan. This format includes an Exif application segment that stores particular image metadata, for example the date and time the picture was captured, the lens f/number and other camera settings, and image captions or comments that can be selected or entered by the camera user.

The processor 320 also creates a low-resolution "thumbnail" size image, which can be created as described in commonly-assigned U.S. Patent No. 5,164,831, issued November 17, 1992 to Kuchta et al., titled "Electronic Still Camera Providing Multi-Format Storage Of Full And Reduced Resolution Images," the disclosure of which is herein incorporated by reference. This thumbnail image has 160 x 120 pixels, to conform to the DCF rules described later, and is stored in RAM memory 326 and supplied to the image display 332.

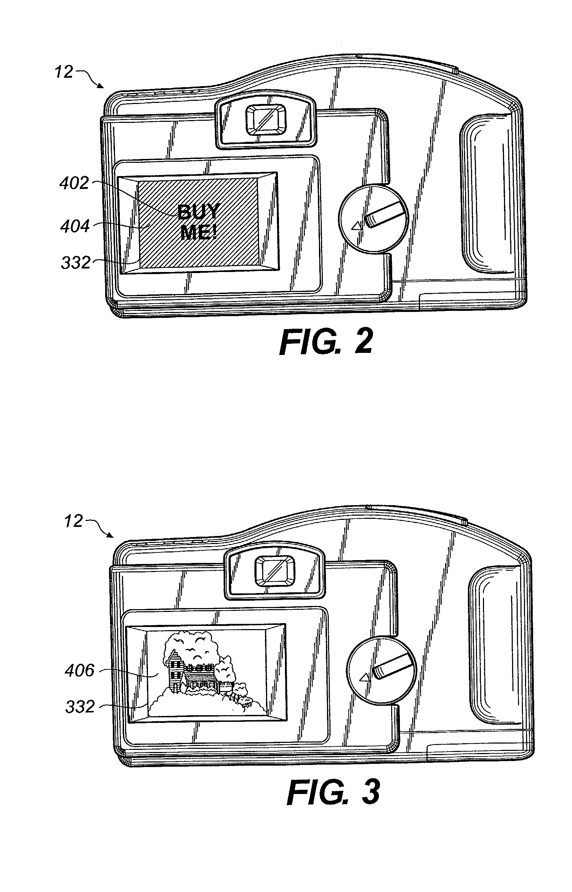

The Exif image files, containing the JPEG compressed main image, thumbnail image, and the image metadata, are stored on the removable memory card 16 using a directory structure conforming to the so-called "DCF" rules defined in *"Design Rule For Camera File System" version 1.0*, December 1998 by the Japan Electronic Industry Development Association (JEIDA), Tokyo, Japan. The display 332 can be put to use in a demonstration mode to assist in selling the digital still camera 12 at retail. Upon sensing power, the processor 320 can access a program that allows the display 332 to show images designed to help sell the digital still camera 12. The images may be simple in composition and can be highly compressed to save program memory in the digital still camera 12. The display routine for the demo can be as simple as a text display 402 on a solid color background 404 as shown in Figure 2. From there, the image displayed may become increasingly complex, requiring additional program code to move graphics and create dynamic displays, and also incorporate photo realistic images 406 as shown in Figure 3, requiring additional memory.

The demo mode may be a custom demo for the digital still camera model upon which the demo is running, or it may be a universal demo for many versions of digital still cameras. If the demo is contained on a removable memory card 16, many different demos may be included. In this case, the digital still camera 12 can automatically select the demo that is appropriate to the digital still camera 12 model or version. If the demo is of the universal type, the program that runs the demo may access image files not in program memory. These image files may be unique to the individual digital still camera 12 model, and may be placed in non-volatile memory somewhere in the digital still camera 12 or in a removable memory card 16. In this fashion, a universal demo may be customized for different digital still cameras 12. Additionally, if the processor does not detect custom images in the appropriate memory locations, it may default to a routine that runs the demo without the additional images.

The demo may be available in all digital still cameras or merely in digital still cameras destined for retail display. Although incorporating the demo mode in all digital still cameras may be unnecessary since not all digital still cameras will be displayed at retail, it may be an advantage to include the demo mode in all digital still cameras so that any one can deliver the demo at retail. It is advantageous to provide the demo without the need for special digital still cameras. Also, if the demo has utility beyond the retail environment, such as providing the user with a slide show of his personally captured images, an additional reason for incorporating the demo mode is provided.

At the retail site, it may be desired to provide the consumer with the ability to use digital still camera 12. In this situation, digital still camera 12 should, preferably, drop out of the demo mode to allow the consumer to use the digital still camera 12. The digital still camera 12 may provide full functionality and then return to demo mode after a period of inactivity. In this manner, the digital still camera 12 allows use while preserving the option for returning to demo mode after a predetermined amount of time.

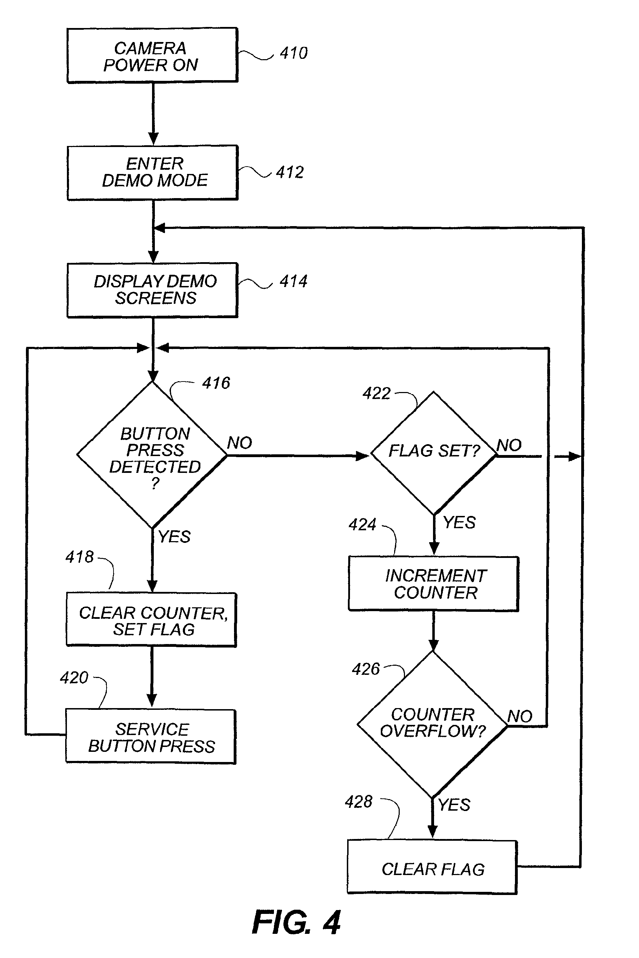

In Figure 4, the power is turned on at step 410, and digital still camera 12 enters demo mode at step 412. Once in demo mode, images are shown on display 332 in step 414. If a button press is detected 416, processor 320 clears a counter (not shown) and sets a flag at step 418 and then services the button press 420. This allows the digital still camera 12 to act as if it had not entered demo mode if it is being handled by a customer. If there is no button press detected at step 416, flag condition is tested at step 422. If the flag is not set, the digital still camera 12 continues in demo mode. If the flag is set, the counter is incremented at step 424. When the counter overflows at step 426, the flag is cleared and digital still camera 12 will return to demo mode. If the counter has not overflowed, digital still camera 12 continues to wait for another button press by returning to step 416.

Power can be applied in different ways. When a standard connection to apply power to recharge the batteries 344 is detected such as connecting the AC/DC converter 345, processor 320 can detect the application of power and default to demo mode. If the power is applied to the digital still camera 12 when there is no removable memory 16 present, the processor 320 can also use this distinction to determine if the digital still camera 12 should default to demo mode or wait for instructions from a user. Additionally, if a USB or other power-supplying computer interface cable 342 is applied, the digital still camera 12 may detect this condition and default to demo mode. In particular, if a non-standard cord is supplied that provides power but not data access, the digital still camera 12 can determine that USB power has been applied but there is no computer connection, and therefore default to demo mode. In any case, there should, preferably, be a provision for defeating the standard digital still camera 12 time out when the unit is placed in demo mode.

In addition, digital still camera 12 has the capability to detect power from either a digital still camera 12 dc-in or a dock dc-in and not cause any problems when two power sources are connected at the same time. Hence, one may be able to power the digital still camera 12 for a demo and still allow a consumer to place the digital still camera 12 in a dock at retail.

If the demo images are provided on a removable memory card 16, and the digital still camera 12 always defaults to demo mode when power is applied regardless of the presence or absence of a removable memory card 16, the demo program will seek images on the removable memory card 16. In this fashion, the demo mode will show sales images when in the retail location, and user-captured images after the user has acquired the digital still camera 12. The processor 320 may seek out some special data on the removable memory to determine if demo mode is appropriate.

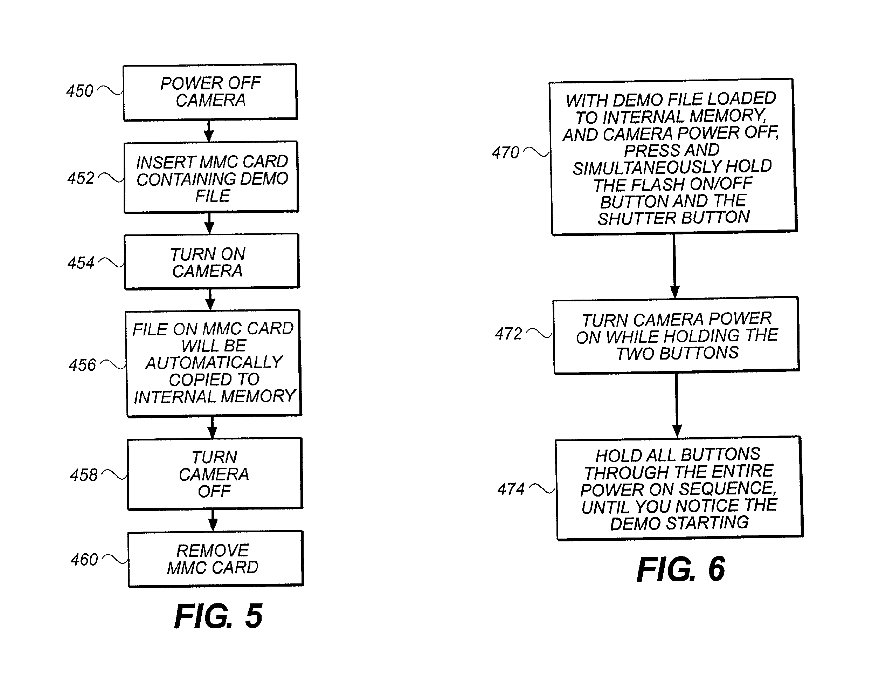

The demo program and images may be downloaded to the digital still camera 12 from a removable memory card 16 as shown in Figure 5. Digital still camera 12 is powered off in step 450. Removable memory card 16 is inserted 452, and digital still camera 12 is turned on 454. File on removable memory card 16 is automatically copied to internal memory in step 456. After the program and images are downloaded and digital still camera 12 is turned off in step 458, the removable memory card 16 may be removed from the digital still camera 12 in step 460 and used to enable another digital still camera 12 to run the demo. The downloading of the program and images into non-removable memory may also occur on the basis of instruction by the clerk at the retail site. This may take the form of a sequence of button presses that instruct the digital still camera 12 to download the program and images. It is preferred that the digital still camera 12 automatically downloads the program and images from the removable memory card 16. This is enabled by the digital still camera 12 identifying the data on the removable memory card 16 as the demo program and images, and then acting to download the data on the removable memory card 16. There may be data on the removable memory card 16 that indicates to the digital still camera 12 that the demo program and/or images are on the removable memory card 16.

Similarly, the removable memory card 16 may contain multiple demo programs and multiple images for these demo programs. In this case it is advantageous for the digital still camera 12 to identify the demo appropriate to the digital still camera 12 and only download the appropriate demo program and/or images.

Figure 6 shows how the demo mode can be enabled. In step 470, the retail clerk presses and holds the flash on/off 333 and shutter buttons 331. The digital still camera 12 is turned on while holding the buttons in step 472. Finally, in step 474, the clerk releases the buttons when it is seen that the digital still camera 12 has entered demo mode.

If the images and data used for demo mode are contained on a removable memory card 16, there may be an associated cost of incorporating it with the digital still camera 12 unless the removable memory card 16 is the one supplied with the digital still camera 12 for saving user images. If digital still camera 12 is supplied with an additional device for enabling the demo mode, this device may be of limited storage capacity and cost. It also may be non-volatile. In this case, there is no likelihood of a retail clerk or potential buyer accidentally erasing the demo images from the demo device. In the case of the demo images residing on volatile removable memory, the demo images should be protected from erasure by some sequence of events that only an owner of the digital still camera 12 would be able to access. An example of such a sequence of events would be downloading images to a host PC 322. The processor 320 would only allow the demo images to be erased after the digital still camera 12 was connected to a computer running digital still camera 12-associated software. Once connected to the computer, the digital still camera 12-associated software could erase the special data enabling the demo, the demo images, or both. If the demo mode only runs when the special data is detected, the demo mode can be disabled entirely if this special data is erased. Conversely, if the user desires to enable the demo mode for display of manufacturer-provided demo images, user captured images, or help related screens, this can be enabled via the digital still camera 12-associated software.

The images for the demo need not require much memory space. Since the demo images are intended only for display on the digital still camera 12, and the resolution of on-digital still camera 12 displays is usually quite limited, any higher resolution than that which is used for display on the digital still camera 12 would be wasted. For example, the resolution of the display on the Kodak LS420™ Digital still camera is 320 pixels by 240 pixels. However, the processor has to be able to identify and display these lower resolution images at full resolution when in demo mode.

The demo mode may be combined with a help function. The digital still camera 12 may always default to demo mode when not in use so that help screens can be accessed. The demo mode may merely scroll through screens intended to help the user operate the digital still camera 12. There can be a basic demo in ROM which is augmented by data in rewritable memory in the digital still camera 12. This method could also be used to upload instructional demos from the PC at the request of the consumer.

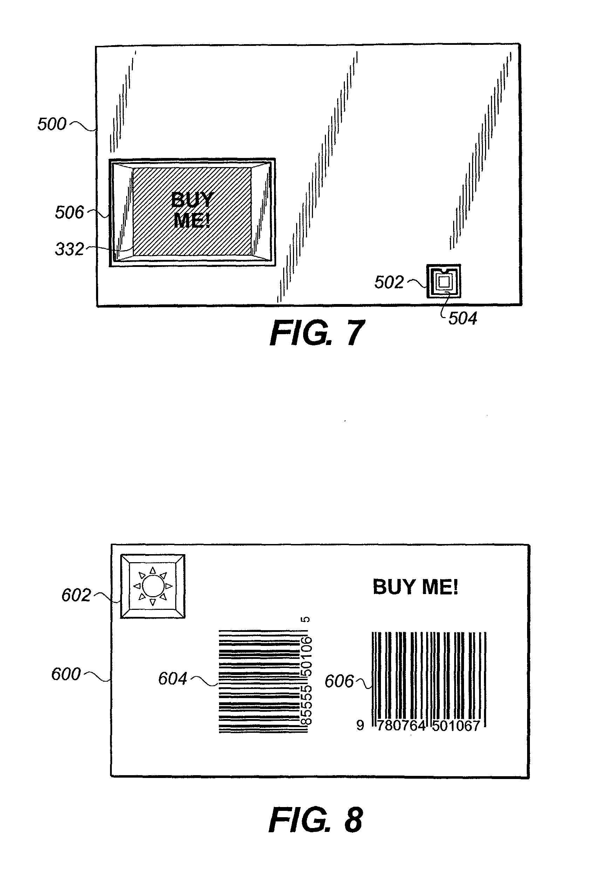

It may be desired to enter demo mode without withdrawing the digital still camera 12 from its packaging. In Figure 7 an opening 502 is provided in packaging 500 to allow access to allow application of a power cable (not shown) to power connector 504. If the digital still camera 12 defaults to the demo mode when power is applied, then the application of power through the packaging 500 will cause the digital still camera 12 to enter demo mode without removal from packaging 500. Of course, packaging 500 would also need to provide a second opening 506 to enable a view of the display 332.

If the demo is resident in digital still camera 12 firmware memory 328, another means of making digital still camera 12 enter demo mode is to use digital still camera 12 to take a photo of a target 600 that indicates that the demo is to be executed. For example, if the retail clerk removes the digital still camera 12 from the packaging 500 for use as a demo unit, he may take a picture of the target 600 provided with the package or provided separately. The target 600 shown in Figure 8 may be provided on the packaging on an unobtrusive surface such as the bottom of the box. The digital still camera 12 can analyze the image captured for certain content such as pattern 602 or barcodes 604 and 606 and enter demo mode if the target 600 is detected.

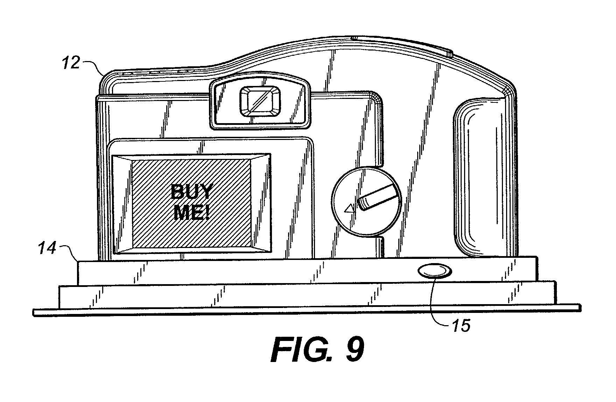

If digital still camera 12 is on display at retail within docking station 14 as shown in Figure 9, digital still camera 12 may detect a press on button 15 on docking station 14 and default to demo mode if there is no associated data transfer command received.

The method for utilizing an image display on a digital camera wherein the demo mode includes a demo program and images, and wherein the demo program and/or images are in a memory of the digital camera.

The method for utilizing an image display on a digital camera wherein the demo mode includes a demo program and images, and wherein the demo program and/or images are provided on a removable memory.

The method for utilizing an image display on a digital camera wherein the demo mode includes a demo program and images, and wherein initiating the demo mode includes detecting presence of or absence of a removable memory.

The method for utilizing an image display on a digital camera wherein the demo mode includes a demo program and images, and wherein the demo program and/or images are provided on a removable memory, and wherein the initiating the demo mode includes detecting presence of the demo program and/or images on the removable memory.

The method for utilizing an image display on a digital camera, wherein the initiating the demo mode includes detecting absence of a battery.

The method for utilizing an image display on a digital camera wherein the initiating the demo mode includes detecting non-battery power.

The method for utilizing an image display on a digital camera wherein the initiating the demo mode includes detecting non-battery power, and wherein the initiating the demo mode includes detecting presence of power from a data interface.

The method for utilizing an image display on a digital camera, further comprising the step of disabling the demo mode upon the digital camera communicating with a computing device running a software program associated with the digital camera.

The method for utilizing an image display on a digital camera, wherein the demonstration further includes a help function.

The method for utilizing an image display on a digital camera, wherein the demo mode includes a demo program and images, and wherein the images are of a resolution no greater than the image display for the digital camera.

The method for utilizing an image display on a digital camera, wherein the demo mode is used to run a slide show of user captured images.

The method for utilizing an image display on a digital camera, wherein the demo mode is used to display sales images.

The method for utilizing an image display on a digital camera, wherein the demo mode includes a demo program and images, and wherein the demo mode is resident in the digital camera and the images are on a removable memory device.

The method for utilizing an image display on a digital camera, wherein the demo mode includes a demo program and images, and wherein the demo mode is on a removable memory device and the images are resident in the digital camera.

## Claims

1. A method for utilizing an image display on a digital camera, comprising the steps of:
a) initiating a demo mode demonstrating features and functions related to the digital camera on the image display;
b) running the demonstration while no user input has been detected;
c) terminating the demonstration upon a detection of a user input;
d) allowing normal usage of the image display; and
e) automatically re-initiating the demonstration after a predetermined elapsed period of time without detecting the user input.

2. The method claimed in claim 1, wherein the demo mode includes a demo program and images.

3. The method claimed in claim 1, wherein the initiating step further comprises:
initiating the demo mode during power-up of the digital camera.

4. The method claimed in claim 1, wherein the user input is activating a button.

5. A digital camera including an image display, comprising:
a) means for initiating a demo mode demonstrating features and functions related to the digital camera on the image display;
b) means for running the demonstration while no user input has been detected;
c) means for terminating the demonstration upon a detection of a user input;
d) means for allowing normal usage of the image display; and
e) means for automatically re-initiating the demonstration after a predetermined elapsed period of time without detecting the user input.

6. The digital camera claimed in claim 5, wherein the demo mode includes a demo program and images.

7. The digital camera claimed in claim 5, wherein the initiating step further comprises:
initiating the demo mode during power-up of the digital camera.

8. The digital camera claimed in claim 5, wherein the user input is activating a button.

9. The digital camera claimed in claim 6, wherein the demo program and/or images are in a memory of the digital camera.

10. The digital camera claimed in claim 6, wherein the demo program and/or images are provided on a removable memory.

11. The digital camera claimed in claim 5, wherein initiating the demo mode includes detecting presence of or absence of a removable memory.

12. The digital camera claimed in claim 10, wherein the initiating the demo mode includes detecting presence of the demo program and/or images on the removable memory.

13. The digital camera claimed in claim 5, wherein the initiating the demo mode includes detecting absence of a battery.

14. The digital camera claimed in claim 5, wherein the initiating the demo mode includes detecting non-battery power.

15. The digital camera claimed in claim 14, wherein the initiating the demo mode includes detecting presence of power from a data interface.

16. The digital camera claimed in claim 5, further comprising:
means for disabling the demo mode upon the digital camera communicating with a computing device running a software program associated with the digital camera.

17. The digital camera claimed in claim 5, wherein the demonstration further includes a help function.

18. The digital camera claimed in claim 6, wherein the images are of a resolution no greater than the image display for the digital camera.

19. The digital camera claimed in claim 5, wherein the demo mode is used to run a slide show of user captured images.

20. The digital camera claimed in claim 5, wherein the demo mode is used to display sales images.

21. The digital camera claimed in claim 6, wherein the demo mode is resident in the digital camera and the images are on a removable memory device.

22. The digital camera claimed in claim 6, wherein the demo mode is on a removable memory device and the images are resident in the digital camera.
